# EUROPÄISCHE PATENTSCHRIFT

(11) **EP 1 284 234 B1**
(45) Veröffentlichungstag und Bekanntmachung des Hinweises auf die Patenterteilung: **21.09.2005**
(21) Anmeldenummer: 02015753.3
(22) Anmeldetag: 13.07.2002
(51) Int. Cl.: C01B 3/36, F23D 14/22, F23D 14/78, B01J 19/26

(54) **Vorrichtung zur Herstellung von Synthesegasen**
Apparatus for producing synthesis gas
Dispositif de production de gaz de synthèse

(30) Priorität: 10.08.2001 DE 10139575
(43) Veröffentlichungstag der Anmeldung: 19.02.2003
(73) Patentinhaber: BASF Aktiengesellschaft, 67056 Ludwigshafen (DE)
(72) Erfinder: Wilhelm, Markus, Dr., 67157 Wachenheim (DE); Hantke, Kay, 67071 Ludwigshafen (DE); Walter, Maximilian, Dr., 67433 Neustadt (DE); Reininghaus, Jörg, Dr., 67134 Birkenheide (DE)

(56) Entgegenhaltungen:
- EP-A- 0 582 521
- US-A- 601 330
- US-A- 5 273 212

## Beschreibung

Zur Darstellung der Erfindungs-Gattung ist im Oberbegriff des Anspruchs 1 von einer bekannten Vorrichtung (Brenner) im Sinne der EP-A-O 545 281 ausgegangen, mit der Synthesegase durch partielle Oxidation kohlenstoffhaltiger Brennstoffe in einem Reaktor ohne Einbauten unter erhöhtem Druck und vergleichsweise hohen Temperaturen von 1000 bis 1600°C hergestellt werden. Der Brenner weist drei koaxial ineinander angeordnete Rohre, die jeweils ein sich konisch verjüngendes Ende besitzen, sowie eine Kühlkammer im Bereich des Brennerausganges auf, wobei die Verbrennungsluft durch die innere und die äußere Zone des Brenners und der kohlenstoffhaltige Brennstoff durch den aus dem inneren und dem mittleren Rohr gebildeten Ringraum geführt wird.

Um die Umsetzung des Brennstoffes zu Synthesegasen möglichst vollständig zu erwirken und die nicht vermeidbare Rußbildung auf möglichst niedrigem Niveau zu halten, ist verfahrenstechnisch eine bestimmte Relation zwischen den Geschwindigkeiten von Brennstoff und Verbrennungsluft einzuhalten. Abweichungen, führen zu einer Verlagerung der besonders heißen Reaktionszone weg vom Reaktorzentrum hin zum Brenner. Durch diesen Effekt wird nicht nur die Rußbildung durch schlechtere Vermischung der Reaktionspartner im Reaktor gefördert, sondern auch der Brenner in besonderem Maße einer thermischen Beanspruchung ausgesetzt. Folge davon ist ein rascher Verschleiß des Brenners. Verschleißmechanismen sind zum einen Oxidation und zum anderen Korrosion durch Angriff von Schwefel und anderen Schlackebildern. Um eine Verlängerung der Standzeit zu erreichen, ist bei dem Brenner gemäß der EP-A-0 545 281 die der Zone der partiellen Oxidation zugewandte Stirnseite mit einer aus einzelnen, nebeneinander angeordneten Keramikplättchen zusammengesetzten Schicht verkleidet. Bei der oxydativen Umsetzung von kohlenstoffhaltigen Brennstoffen treten jedoch am und in der Nähe des Brennermundes so hohe Temperaturen auf, dass auch die benachbarten Brennerteile einer schnellen Abnutzung, z.B. durch oxydative Vorgänge sowie durch Wärmespannungen und Rißbildung, unterliegen. Darüber hinaus ist die Befestigung der Keramikplättchen mit hohem Aufwand verbunden.

Mit der Erfindung soll eine Vorrichtung zur Herstellung von Synthesegasen durch partielle Oxidation kohlenstoffhaltiger Brennstoffe in einem Reaktor ohne Einbauten geschaffen werden, die von den genannten Mängeln frei ist. Als Besonderheit ist zusätzlich gefordert, dass im Fall von Verschleißerscheinungen nicht die Vorrichtung insgesamt ausgetauscht werden muß, sondern nur die besonders gefährdeten Teile.

Zur Lösung dieser Aufgabe werden die im Kennzeichen des Anspruchs 1 enthaltenen Maßnahmen vorgeschlagen.

Im Gegensatz zu dem bekannten Brenner sind bei der Vorrichtung nach der Erfindung die koaxial ineinander angeordneten Rohre mit im allgemeinen kreisförmigem Querschnitt jeweils aus zwei Rohrabschnitten zusammengesetzt, wobei die Verbindungsstellen so festzulegen sind, dass sie sich in der Einbaulage der Vorrichtung innerhalb des Reaktors befinden. Während für die aus dem Reaktor herausgeführten, oberen Rohrabschnitte ein Metall mit hoher Wärmeleitfähigkeit verwendet werden kann, bestehen die unteren endseitig konisch verjüngten und zwischen sich einen Düsenspalt ausbildenden Rohrabschnitte aus einer hochtemperaturfesten und hochschmelzenden Metalllegierung mit einem oder mehreren Legierungsbestandteilen aus Hafnium (Hf), Molybdän (Mo), Niob (Nb), Rhenium (Re), Tantal (Ta), Wolfram (W) und/oder Zirkon (Zr). Vorzugsweise kommen Metalllegierungen aus Tantal und Wolfram, Tantal und Rhenium sowie Tantal und Molybdän in Betracht, beispielsweise die Legierungen Ta5W, Ta10W oder Ta4Re.

Möglich ist es auch, die unteren Rohrabschnitte aus Keramikwerkstoff oder keramikverstärkten Metallen herzustellen.

Weitere Maßnahmen ergeben sich aus den Unteransprüchen 2 bis 4.

Es hat sich gezeigt, dass eine deutliche Steigerung der Betriebszeit der Vorrichtung erreichbar ist, wenn die Rohrabschnitte aus einer Tantal-Wolfram-Legierung mit einer Korngröße von 8-10 ASTM bestehen. Ein solches feinkörniges Gefüge wird in bekannter Weise durch mehrere Zyklen von Kaltverformung mit nachfolgender Wärmebehandlung der pulverförmigen Metalle erhalten. Vorzugsweise wird dabei eine Kaltverformung mit einem Verformungsgrad von etwa 30 % zu Beginn der Zyklen bis 90 % am Ende der Bearbeitungsfolgen durchgeführt. Dazwischen erfolgt jeweils eine Rekristallisationsglühung bei einer Temperatur zwischen 1100 und 1250°C.

Die Erfindung wird nachfolgend unter Hinweis auf die Zeichnungen näher erläutert.

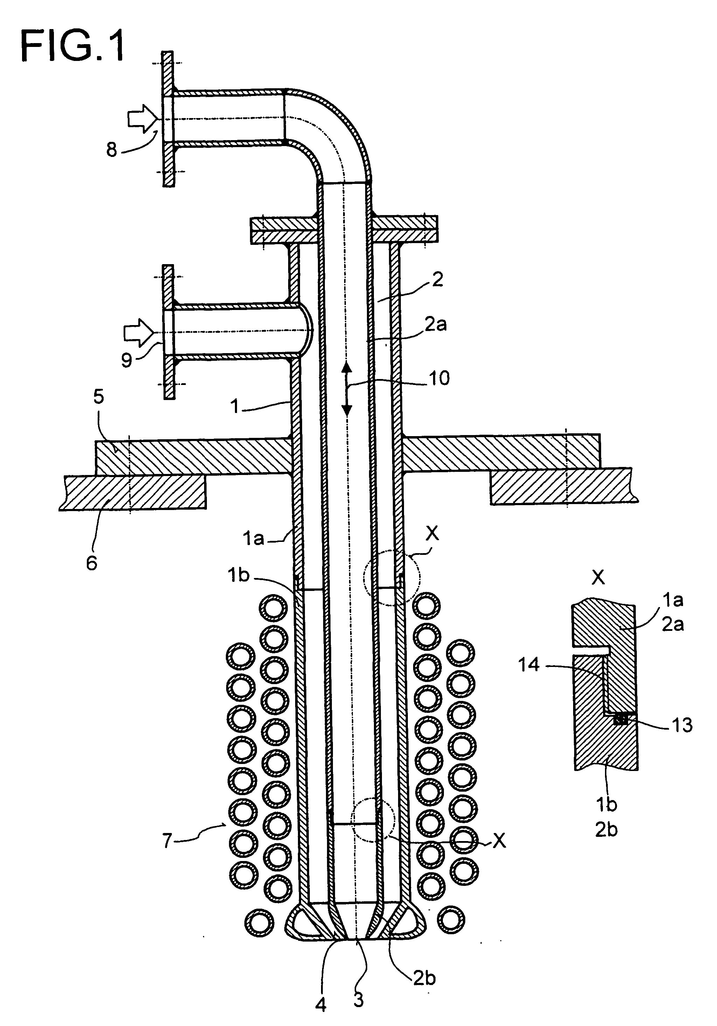

Es zeigt
- Figur 1: einen Längsschnitt der Vorrichtung, bei der die Rohrabschnitte miteinander verschraubt sind
und

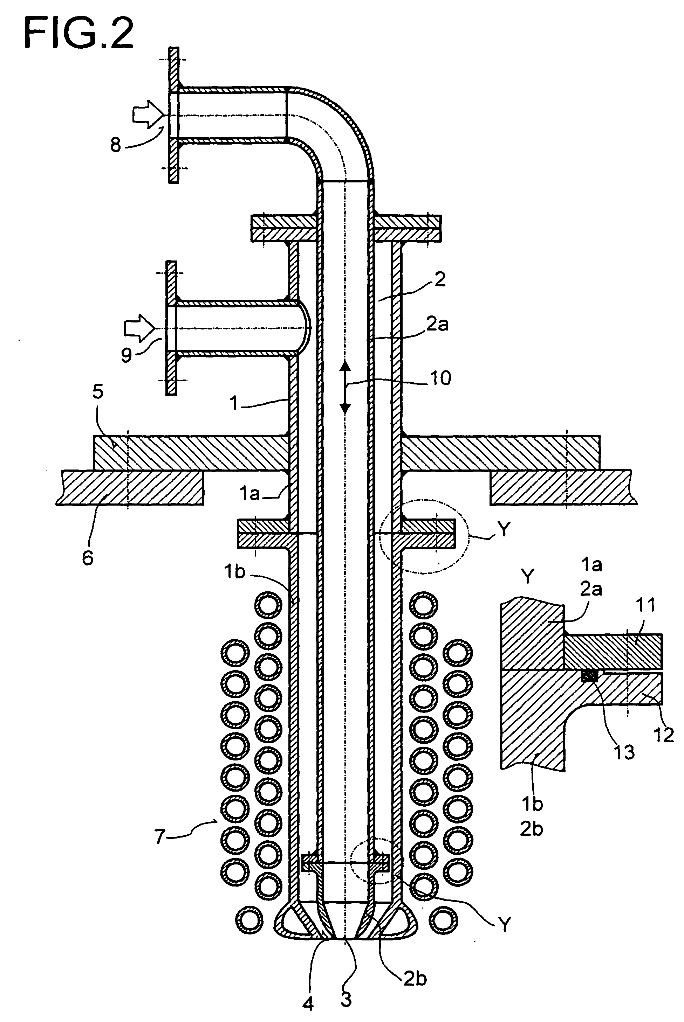

- Figur 2: einen Längsschnitt der Vorrichtung, bei der die Rohrabschnitte mittels Flansche miteinander verbunden sind.

Im wesentlichen besteht die Vorrichtung zur Herstellung von Synthesegasen aus einem äußeren Rohr 1 und einem konzentrisch von diesem umschlossenen inneren Rohr 2. Die Rohre sind jeweils aus zwei Rohrabschnitten (1a, 1b) und (2a, 2b) zusammengesetzt, wobei die freien Enden der unteren Rohrabschnitte (1b und 2b) konisch verjüngt sind, so dass eine düsenartige Austrittsöffnung 3 sowie ein ringförmiger Düsenspalt 4 entstehen. Formen und Anordnungen der konischen Verjüngungen beeinflussen die Art und Weise der Gasherstellung ebenso wie der Abstand der Rohrenden zueinander. Über eine Flanschverbindung 5 ist das äußere Rohr 1 an der Wand des Reaktors 6 befestigt. Mit 7 ist eine Kühleinrichtung bezeichnet.

Das in das äußere Rohr 1 eingesetzte Rohr 2 dient im allgemeinen der Zufuhr des Brennstoffes. Diese erfolgt bei 8, wohingegen die Verbrennungsluft über die Einrichtung 9 in den zwischen den Rohren 1 und 2 gebildeten Ringspalt zugeführt wird. Zur Anpassung der Vorrichtung an unterschiedliche Durchsatzmengen der Verbrennungsluft, z.B. im Teillastbetrieb, kann der Düsenspalt 4 variiert werden. Dazu ist das Rohr 2 vertikal verschiebbar, hier durch den Doppelpfeil 10 angedeutet.

Erfindungsgemäß sind die Rohrabschnitte 1a und 1b bzw. 2a und 2b lösbar miteinander verbunden. Dies kann dadurch erfolgen, daß die Abschnitte durch ein Gewinde 14 oder durch eine Flanschkonstruktion 11, 12 form- und kraftschlüssig miteinander verspannt werden. Dabei wird die Dichtwirkung über eine federnde, metallische Dichtung, vorzugsweise über einen flexiblen, metallischen O-Ring 13 aufgebracht. Es ist somit möglich, nicht die gesamte Vorrichtung aus hochtemperaturfesten und hochschmelzenden, teuren Metalllegierungen zu fertigen, sondern nur die unteren Rohrabschnitte 1b, 2b in dem thermisch besonders beanspruchten Bereich der Vorrichtung, insbesondere in der Nähe des Düsenspaltes 4.

Die beschriebene Vorrichtung zeichnet sich durch eine wesentlich höhere Standzeit gegenüber bekannten Vorrichtungen aus. Sie gewährleistet günstige Vergasungsbedingungen sowohl im Teillastals auch im Vollast-Betrieb dadurch, dass die Austrittsgeschwindigkeit der Verbrennungsluft deutlich herabgesetzt werden kann, was letztlich zu einer reduzierten Rußbildung führt. Auch häufige und schnelle Belastungsänderungen wirken sich auf das Verschleißverhalten praktisch nicht aus.

## Patentansprüche

1. Vorrichtung zur Herstellung von Synthesegasen durch partielle Oxidation kohlenstoffhaltiger Brennstoffe in einem Reaktor ohne Einbauten, mit wenigstens zwei koaxial ineinander angeordneten und teilweise in den Reaktor hineinreichenden Rohren (1, 2), von denen das innere Rohr (2) eine Einrichtung (8) zum Zuführen der Brennstoffe und das äußere Rohr (1) eine Einrichtung (9) zum Zuführen von Verbrennungsluft aufweist, die Rohre endseitig konisch verjüngt sind, zwischen sich einen Düsenspalt (4) ausbilden und zumindest im Bereich des Düsenspaltes von einer Kühlkammer (7) umgeben sind, **dadurch gekennzeichnet, dass** die Rohre (1, 2) jeweils aus zwei Abschnitten (1a, 1b) und (2a, 2b) zusammengesetzt sind, wobei die in den Reaktor (6) hineinreichenden Rohrabschnitte (1b) und (2b) aus einer hochtemperaturfesten und hochschmelzenden Metalllegierung mit einem oder mehreren Legierungsbestandteil(en) aus Hafnium (Hf), Molybdän (Mo), Niob (Nb), Rhenium (Re), Tantal (Ta), Wolfram (W) und/oder Zirkon (Zr) bestehen.

2. Vorrichtung nach Anspruch 1, **dadurch gekennzeichnet, dass** die Rohrabschnitte (1b) und (2b) aus einer Tantal-Wolfram-Legierung mit einer Korngröße von 8-10 ASTM bestehen.

3. Vorrichtung nach den Ansprüchen 1 und 2, **dadurch gekennzeichnet, dass** die Rohrabschnitte (1a, 1b) und/oder (2a, 2b) miteinander verschraubbar sind.

4. Vorrichtung nach den Ansprüchen 1 und 2, **dadurch gekennzeichnet, dass** die Rohrabschnitte (1a, 1b) und/oder (2a, 2b) mittels einer Flansch-Konstruktion (11, 12) form- und kraftschlüssig miteinander verbindbar sind.

## Claims

1. An apparatus for producing synthesis gases by partial oxidation of carbon-containing fuels in a reactor without internals, having at least two tubes (1, 2) which are arranged coaxially inside one another, project partially into the reactor and of which the inner tube (2) has a device (8) for supplying the fuels and the outer tube (1) has a device (9) for supplying combustion air, the tubes are tapered conically at the end, and between them form a nozzle gap (4) and are surrounded, at least in the region of the nozzle gap, by a cooling chamber (7), wherein the tubes (1, 2) are each composed of two sections (1a, 1b) and (2a, 2b), the tube sections (1b) and (2b) which project into the reactor (6) consisting of a high-melting metal alloy which is able to withstand high temperatures and has one or more alloying constituent(s) selected from the group consisting of hafnium (Hf), molybdenum (Mo), niobium (Nb), rhenium (Re), tantalum (Ta), tungsten (W) and/or zirconium (Zr).

2. An apparatus as claimed in claim 1, wherein the tube sections (1b) and (2b) consist of a tantalum-tungsten alloy with a grain size of 8-10 ASTM.

3. An apparatus as claimed in claim 1 or 2, wherein the tube sections (1a, 1b) and/or (2a, 2b) can be screwed together.

4. An apparatus as claimed in claim 1 or 2, wherein the tube sections (1a, 1b) and/or (2a, 2b) can be connected to one another in a positively and nonpositively locking manner by means of a flange structure (11, 12).

## Revendications

1. Dispositif de production de gaz de synthèse par oxydation partielle de combustibles contenant du carbone dans un réacteur sans élément encastré, comportant au moins deux tubes (1, 2) qui sont agencés coaxialement l'un dans l'autre et pénètrent partiellement dans le réacteur et dont le tube interne (2) présente un dispositif (8) d'amenée des combustibles et le tube externe (1), un dispositif d'amenée d'air de combustion, les tubes s'amincissant de manière conique à l'extrémité, formant entre eux une fente de tuyère (4) et étant entourés au moins dans la zone de la fente de tuyère par une chambre de refroidissement (7), **caractérisé en ce que** les tubes (1, 2) sont chacun composés de deux tronçons (1a, 1b) et (2a, 2b), les tronçons (1b) et (2b) pénétrant dans le réacteur (6) étant constitués d'un alliage métallique résistant aux hautes températures et à point de fusion élevé qui comporte un ou plusieurs éléments d'alliage à base d'hafnium (Hf), de molybdène (Mo), de niobium (Nb), de rhénium (Re), de tantale (Ta), de tungstène (W) et/ou de zirconium (Zr).

2. Dispositif suivant la revendication 1, **caractérisé en ce que** les tronçons (1b) et (2b) sont constitués d'un alliage de tantale-tungstène présentant une grosseur de grain de 8-10 ASTM.

3. Dispositif suivant les revendications 1 et 2, **caractérisé en ce que** les tronçons (1a, 1b) et/ou (2a, 2b) peuvent être vissés l'un avec l'autre.

4. Dispositif suivant les revendications 1 et 2, **caractérisé en ce que** les tronçons (1a, 1b) et/ou (2a, 2b) peuvent être reliés l'un à l'autre par une liaison due à la forme et à une force au moyen d'une construction à brides (11, 12).
